# EUROPÄISCHE PATENTSCHRIFT

(11) **EP 1 118 227 B1**
(45) Veröffentlichungstag und Bekanntmachung des Hinweises auf die Patenterteilung: **03.05.2006**
(21) Anmeldenummer: 99947452.1
(22) Anmeldetag: 01.10.1999
(51) Int. Cl.: H04Q 3/00

(54) **VERFAHREN UND SERVER ZUR BEHANDLUNG VON IN-CALLS BEI IN-DIENSTRUFNUMMERNPORTABILITÄT**
METHOD AND SERVER FOR PROCESSING INTELLIGENT NETWORK CALLS IN INTELLIGENT NETWORK SERVICE CALL NUMBER PORTABILITY
PROCEDE ET SERVEUR DE TRAITEMENT D'APPELS DANS UN RESEAU INTELLIGENT AVEC PORTABILITE DE NUMEROS DE SERVICES DE RESEAU INTELLIGENT

(30) Priorität: 01.10.1998 EP 98118584
(43) Veröffentlichungstag der Anmeldung: 25.07.2001
(73) Patentinhaber: SIEMENS AKTIENGESELLSCHAFT, 80333 München (DE)
(72) Erfinder: ZYGAN-MAUS, Renate, D-81477 München (DE); RUCKSTUHL, Hanspeter, D-82515 Wolfratshausen (DE)
(86) Internationale Anmeldenummer: PCT/EP1999/007311
(87) Internationale Veröffentlichungsnummer: WO 2000/021309

(56) Entgegenhaltungen:
- EP-A- 0 827 319
- US-A- 5 764 745
- SWIFT D J ET AL: "NUMBER PORTABILITY-AN OPPORTUNITY FOR ALTERNATIVE CARRIERS" BRITISH TELECOMMUNICATIONS ENGINEERING, Bd. 17, Nr. PART 02, August 1998 (1998-08), Seiten 83-87, XP000777425
- GIORDANO A ET AL: "PCS NUMBER PORTABILITY" IEEE INTERNATIONAL SYMPOSIUM ON PERSONAL, INDOOR AND MOBILE RADIO COMMUNICATIONS, 18. September 1994 (1994-09-18), Seiten 1146-1150, XP002037912

## Beschreibung

Im Rahmen der Öffnung der Märkte für öffentliche Telekommunikationsdienste wird in vielen Ländern die Rufnummernportabilität auch für IN-Dienstrufnummern gefordert, d.h. IN-Dienstteilnehmer können ihre IN-Dienstrufnummer behalten, wenn sie zu einem anderen Netzbetreiber/Dienstanbieter wechseln.

Aus dem Dokument EP-A-0 827 319 ist ein Verfahren zur Bereitstellung von Rufnummernportabilität der Firma AT&T bekannt. Nach diesem Verfahren wird bei einem Call mit einer portierten Teilnehmerrufnummer von einer Vermittlungsstelle eine Abfrage an eine Dienstplattform (SCP) eines Intelligenten Netzes zur unterstützenden Behandlung des Calls gestartet. Die Dienstplattform (SCP) beantwortet die Abfrage, indem sie der Vermittlungsstelle die sogenannte "Location Routing Number" mitteilt, anhand derer die Vermittlungsstelle den Call zur nunmehrigen End-Vermittlungsstelle des portierten Teilnehmers routet.

Betreiber eines öffentlichen Netzes müssen bei Vorhandensein von mehreren Intelligenten Netzen in der Lage sein, Rufe (Calls) zu einzelnen IN-Dienstrufnummern zu demjenigen (Intelligenten) Netz zu routen, von dem diese IN-Dienstrufnummer unterstützt wird. Bisher bekannte Lösungen können zu Kapazitätsproblemen bei den IN-Diensteplattformen (Service Control Point SCP) oder in den Vermittlungsstellen des Basisnetzes führen (Erläuterung: Ein Intelligentes Netz (IN) kann als ein um die IN-Funktionen Service Switching Function SSF, Service Control Function SCF, Service Management Function SMF und die entsprechenden Schnittstellen zum Basisnetz erweitertes Basisnetz verstanden werden. Ein IN-Call erfordert also im Unterschied zum Basic-Call nicht nur die Basis-Netz-Funktionalität sondern auch die speziellen IN-Funktionen).

Normale IN-Dienste sind solche, bei denen die zum Verbindungsaufbau gewählte öffentliche Nummer den IN-Dienstteilnehmer bereits eindeutig identifiziert. Dies ist bei gewählten IN-Diensten in der Regel der Fall. Mögliche Sonderformen von gewählten IN-Diensten, bei denen die IN-Dienstteilnehmerrufnummer erst nach Erreichen des IN-Dienstes mithilfe eines Dialoges über den Nutzkanal abgefragt wird, können im Prinzip nach dem Empfang der IN-Dienstteilnehmerrufnummer ebenfalls wie die normalen IN-Dienste weiterbehandelt werden.

Bisherige Lösungen für IN-Dienstrufnummernportabilität können in zwei Kategorien eingeteilt werden:
A. Lösungen mit Rückwirkungen auf die eigene IN-Diensteplattform
B. Lösungen mit Abfrage eines Rufnummernportabilitätsservers vor einer Abfrage der eigenen IN-Diensteplattform

### Zu A:

Bei diesen Lösungen wird vom Basisnetz für alle IN-Dienstrufnummern (solche, die von der eigenen IN-Diensteplattform unterstützt werden und solche, die von Dienstplattformen in fremden Netzen unterstützt werden) eine normale IN-Abfrage zur eigenen IN-Diensteplattform durchgeführt. Die IN-Diensteplattform stellt fest, ob sie die gewählte IN-Dienstrufnummer unterstützt oder ob die gewählte IN-Dienstrufnummer von einem anderen Netz unterstützt wird. In beiden Fällen weist die IN-Diensteplattform die anfragende Basisnetzvermittlungsstelle über die existierende IN-Signalisierung an, wie der Ruf weiterzubehandeln ist. Beispielsweise kann die IN-Diensteplattform die Vermittlungsstelle anweisen, den Ruf an das zuständige Netz weiterzuvermitteln, indem sie eine Netzkennung ermittelt und der Vermittlungsstelle als Routinginformation mitteilt.

Bei Lösungen vom Typ A wird die Kapazität der IN-Diensteplattform teilweise für die Behandlung fremder IN-Dienstrufnummern verbraucht, was zu Kapazitätsengpässen für die Behandlung der eigenen IN-Dienstrufnummern führen kann. Da das Basisnetz denselben Triggermechanismus für eigene und für fremde IN-Dienstrufnummern verwendet, dürfen Lastbegrenzungsprozeduren für die Abfragen der IN-Diensteplattform in den Vermittlungsstellen (Call Gapping Funktionen), die auch fremde IN-Dienstrufnummern betreffen würden (z.B. eine dienstbezogene Lastbegrenzung) nicht verwendet werden.

### Zu B:

Um sicherzustellen, daß die eigene IN-Diensteplattform nur eigene IN-Dienstrufnummern behandeln muß, wird vom Basisnetz für jede gewählte IN-Dienstrufnummer ein besonderer Rufnummernportabilitätsserver (NP-Server; NP = Number Portability) über die IN-Signalisierung angefragt. Der NP-Server stellt fest, ob die gewählte IN-Dienstrufnummer im eigenen Netz unterstützt wird oder in einem anderen Netz. Der NP-Server weist die abfragende Vermittlungsstelle über die IN-Signalisierung an, wie der Ruf weiterzubehandeln ist. Für eigene IN-Dienstrufnummern führt das Basisnetz nach der Abfrage beim NP-Server eine normale IN-Abfrage zur eigenen IN-Dienstplattform durch. Für fremde IN-Dienstrufnummern wird der Ruf entsprechend der Anweisung des NP-Servers zum zuständigen fremden Netz geroutet.
Bei Lösungen vom Typ B wird die Kapazität der eigenen IN-Dienstplattform geschont, aber dafür zusätzliche Basisnetzkapazität für die vorgeschaltete Abfrage bei einem besonderen NP-Server benötigt. Bei Verwendung von entkoppelten Triggermechanismen für die vorgeschaltete Abfrage beim NP-Server und für die nachfolgende Abfrage bei der eigenen IN-Diensteplattform können Dienst- und Rufnummernbezogenen Lastbegrenzungsprozeduren für die IN-Diensteplattform (Call Gapping Funktionen) in den Vermittlungsstellen uneingeschränkt benutzt werden.

Der Erfindung liegt die Aufgabe zugrunde, ein Verfahren zur Behandlung von IN-Calls anzugeben, durch das eine Bereitstellung von IN-Dienstrufnummernportabilität ohne zusätzliche Kapazitätsanforderungen an die Vermittlungsstellen oder die IN-Diensteplattformen des öffentlichen Telefonnetzes ermöglicht wird.

Im folgenden wird ein Ausführungsbeispiel der Erfindung anhand der Zeichnung beschrieben, wobei die Zeichnung zwei Figuren umfaßt.

Von einem NP-Server wird eine nachfolgend näher erläuterte Rufnummernportabilitätsfunktion erbracht, die von einer Vermittlungsstelle des Basisnetzes durch eine normale IN-Abfrage angestoßen wird, und die diese IN-Abfrage an eine IN-Dienstplattform des eigenen Netzes weiterleiten kann, wenn es sich um eine Abfrage zu einer eigenen IN-Dienstrufnummer handelt.

Durch das erfindungsgemäße Verfahren wird weder in den Vermittlungsstellen des Basisnetzes noch in den IN-Diensteplattformen zusätzliche Kapazität benötigt.

Bei Anwendung des erfindungsgemäßen Verfahrens können die IN-Lastbegrenzungsprozeduren in den Vermittlungsstellen für IN-Abfragen an die IN-Diensteplattformen (Call Gapping Funktionen), allerdings nicht mehr verwendet werden, da sie auch fremde IN-Dienstrufnummern betreffen könnten. Anstelle der Lastbegrenzungsprozeduren in den Vermittlungsstellen können andere Lastbegrenzungsmechanismen eingesetzt werden, z.B. im NP-Server.

Bei der nunmehr folgenden näheren Erläuterung des erfindungsgemäßen Verfahren wird das standardisierte Signalisierungssystem #7 als dem Intelligenten Netz beispielhaft zugrundeliegendes Signalisierungssystem angenommen. Die Erfindung ist jedoch auch bei Verwendung anderer Signalisierungsverfahren als dem Verfahren nach #7 zum Transport der Anwendungsdaten (TCAP, INAP) anwendbar. Bei Verwendung von IP (Internet Protokolle) wäre anstatt des SCCP-GlobalTitles die IP-Addresse zu bewerten und zu manipulieren (Anmerkung: Es gibt bereits Beispiele, wo zum Transport von Anwendungsdaten in herkömmlichen Telecommunikationsnetzen (PSTN, PLMN) IP verwendet wird.

Eine Vermittlungsstelle des Basisnetzes erkennt eine gewählte IN-Dienstrufnummer. Wenn ausreichend viele gewählte Ziffern vorliegen, um den IN-Dienstteilnehmer eindeutig zu identifizieren, sendet die Vermittlungsstelle eine IN-Abfrage (enthält die gewählte IN-Dienstrufnummer) gemäß der normalen IN-Signalisierung ihres Netzes an einen erfindgsgemäßen NP-Server. Für die Vermittlungsstelle ist die Umleitung der Nachricht über den NP-Server transparent, d.h. die Vermittlungsstelle "denkt", daß sie die IN-Abfrage an eine IN-Diensteplattform stellt.

Bei Verwendung von z.B. ETSI-Signalisierungsstandards sendet die Vermittlungsstelle die folgende SCCP/TCAP-Meldung:
SCCP/TCAP-Meldung "UNIT-DATA/BEGIN", die die INAP-Operation "InitialDP" mit den Parametern
   - servicekey = IN-Dienstekennung (z.B. für Persönliche Rufnummer)
   - calledPartyNumber = gewählte IN-Dienstrufnummer enthält.

Die SCCP-Adresse des NP-Servers ist in der Vermittlungsstelle als Global Title X gespeichert.

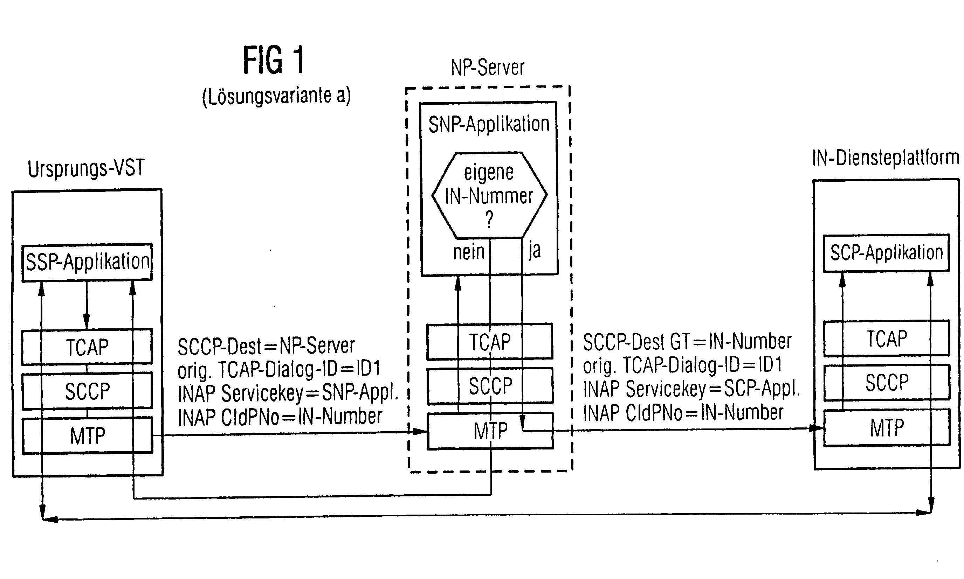

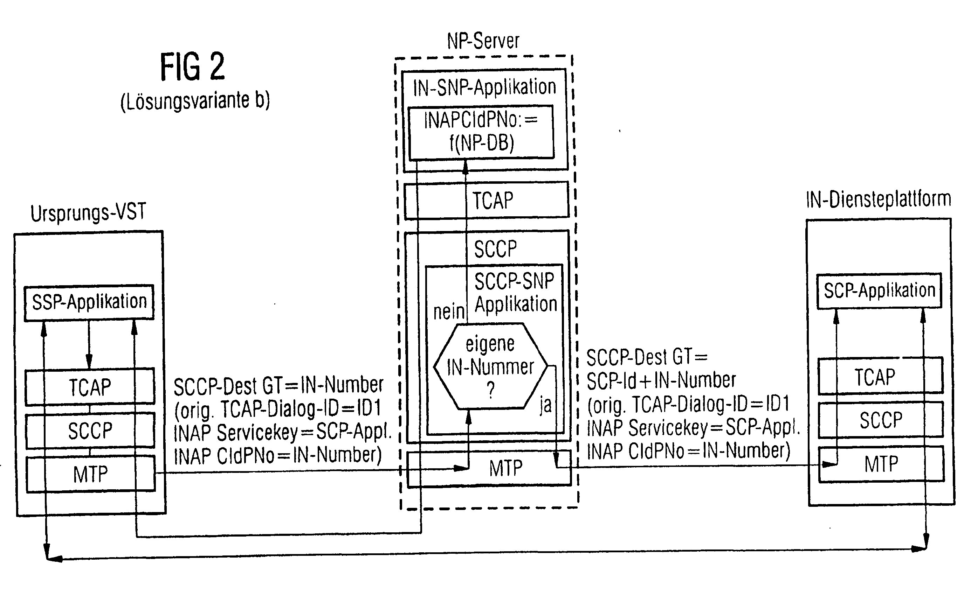

Für den weiteren Ablauf des Verfahren können zwei Varianten Anwendung finden, die im folgenden als (Lösungs-)Variante a) und b) bezeichnet werden, wobei deren Erläuterung durch der Figur 1 (Variante a)) und der Figur 2 (Variante b)) unterstützt wird.

### Variante a) :

Im NP-Server wird die INAP-Meldung ausgewertet und aufgrund des Parameters servicekey wird zu einem speziellen IN-Dienstrufnummernportabilitätsprogramm (SNP Applikation, wobei SNP = Service Number Portability) verzweigt. Dieses Programm prüft, von welchem Netzbetreiber die gewählte IN-Dienstrufnummer unterstützt wird. Wird die IN-Dienstrufnummer von einem fremden Netz unterstützt, ermittelt der NP-Server die erforderliche Routing-Information (z.B. die Netzkennung eines Gateway-Knotens zu dem fremden Netz) und weist die abfragende Vermittlungsstelle an, den Ruf zu diesem Gateway zu routen.

Bei Verwendung von ETSI - Signalisierungsstandards sendet der NP-Server in diesem Fall an die Vermittlungsstelle z.B. die folgende SCCP/TCAP-Meldung:
Innerhalb einer SCCP/TCAP-Meldung UNIT-DATA/END die INAP-Operation Connect mit den Parametern
   - destinationRoutingAddress = Netzkennung
   - cutAndPaste = 0.

Wird die IN-Dienstrufnummer vom eigenen Netz unterstützt, ermittelt der NP-Server aus der IN-Dienstrufnummer eine SCCP-Adresse für die zuständige eigene IN-Diensteplattform; z.B. kann die IN-Dienstrufnummer selbst als Global Title für die SCCP-Adressierung der IN-Diensteplattform verwendet werden. Der NP-Server leitet die ursprüngliche Meldung der Vermittlungsstelle über das #7-Signalisierungsnetz an die zuständige eigene IN-Diensteplattform weiter. Der NP-Server kann die Weiterleitung der Meldung von IN-Dienstplattform-bezogenen Überlaststeuerungskriterien abhängig machen. Kann eine Meldung nicht weitergeleitet werden, kann der NP-Server die absendende Vermittlungsstelle anweisen, den Ruf auszulösen.

Bei Verwendung von z.B. ETSI - Signalisierungsstandards sendet die NP-Server die folgende SCCP/TCAP-Meldung:
Innerhalb einer SCCP/TCAP-Meldung UNIT-DATA/BEGIN die INAP-Operation InitialDP mit den Parametern
   - servicekey = IN-Dienstekennung (z.B. für Persönliche Rufnummer)
   - CalledPartyNumber = gewählte IN-Dienstrufnummer.

Auch auf der TCAP-Ebene bleibt die ursprüngliche Meldung unverändert. Insbesondere verwendet der NP-Server dieselbe von der Vermittlungsstelle vergebene TCAP-Dialog-ID. Auf der SCCP-Ebene gibt der NP-Server als Ziel-Adresse die ermittelte neue SCCP-Adresse an, z.B. den SCCP-GlobalTitle = gewählte IN-Dienstrufnummer. Als Ursprung der Meldung gibt der NP-Server die in der ursprünglichen Meldung empfangene SCCP-Adresse der abfragenden Vermittlungsstelle an.

Die Umleitung der Nachricht durch den NP-Server ist für die IN-Diensteplattform somit transparent, d.h. die IN-Diensteplattform "denkt", daß sie die IN-Abfrage direkt von der Vermittlungsstelle erhalten hat. Die IN-Diensteplattform bearbeitet die IN-Abfrage daher wie eine direkte IN-Abfrage der Vermittlungsstelle und sendet eine entsprechende Antwort an die Vermittlungsstelle.

### Variante b):

Im NP-Server wird bereits die SCCP-Meldung ausgewertet; ein spezielles SCCP-Dienstrufnummernportabilitätsprogramm (SCCP-SNP-Applikation) prüft, zu welchem Netzbetreiber die SCCP-Adresse, welche im SSP aus der gewählten IN-Dienstrufnummer abgeleitet wurde, gehört.

(Einschub: Wegen der grossen Datenmenge, wird das SNP-Programm und zugehörige Daten am besten an zentraler Stelle angesiedelt. Hierzu bietet sich die Integration mit einem Signalling Transfer Point/Signalling Relay Point (STP/SPR), eventuell auch mit einem SCP an. Die Integration mit dem SSP ist auch möglich, allerdings weniger attraktiv)

Gehört die SCCP-Adresse bzw. IN-Dienstrufnummer zu einem fremden Netz, wird die INAP-Meldung via TCAP an ein IN-Dienstrufnummernportabilitätsprogramm weitergeleitet. Dieses prüft, von welchem Netzbetreiber die gewählte IN-Dienstrufnummer unterstützt wird, ermittelt die erforderliche Routing-Information und weist die abfragende Vermittlungsstelle an, den Ruf in dieses Netz zu routen (siehe Variante 2a).

Wird die SCCP-Adresse bzw. IN-Dienstrufnummer hingegen vom eigenen Netz unterstützt, ermittelt der NP-Server aus der SCCP-CdPN eine neue SCCP-Adresse für die zuständige eigene IN-Diensteplattform. Der NP-Server leitet die ursprüngliche Meldung der Vermittlungsstelle über das #7-Signalisierungsnetz an die zuständige eigene IN-Diensteplattform weiter. Diese Lösungsvariante erlaubt die Weiterleitung der SCCP/TCAP-Meldung ohne Einbeziehung der TCAP- und Applikationsebene und ist damit dynamisch günstiger als die Variante 2a.

Für die beiden genannten Varianten gilt gleichermaßen folgendes:

Eine IN-Diensteplattform erhält die vom NP-Server umgeleitete IN-Abfrage der Vermittlungsstelle. Die Umleitung der Nachricht über den NP-Server ist für die IN-Diensteplattform transparent, d.h. die IN-Diensteplattform "denkt", daß sie die Nachricht direkt von einer anfragenden Vermittlungsstelle erhalten hat. Die IN-Diensteplattform bearbeitet die IN-Abfrage somit wie eine direkte IN-Abfrage der Vermittlungsstelle und sendet die Antwort auf die IN-Abfrage daher auch an die Vermittlungsstelle und nicht an den NP-Server.

Für die Vermittlungsstelle ist die Umleitung der Nachricht über den NP-Server ebenfalls transparent. Der von der Vermittlungsstelle initiierte TCAP-Dialog wird mit der IN-Diensteplattform entsprechend den standardisierten TCAP-Prozeduren geführt.

## Patentansprüche

1. Verfahren zur Behandlung von Calls, demgemäß
- von einer Vermittlungsstelle (Ursprungs-VST) eines Netzes, das einem Intelligenten Netz als Basis-Netz zugrunde liegt, bezüglich eines empfangenen Calls, zu dessen Behandlung die Unterstützung eines Intelligenten Netzes benötigt wird, eine Abfrage an ein Intelligentes Netz gestartet wird,
- die genannte Abfrage von einem bestimmten Server (NP-Server) empfangen wird, durch den anhand der in der Abfrage enthaltenen Informationen ermittelt wird, von welchem Intelligenten Netz der Call unterstützt wird,
- von dem genannten Server die genannte Abfrage an eine Dienstplattform (IN-Dienstplattform) des ermittelten Intelligenten Netzes weitergeleitet wird, wenn der Call in dem Basis-Netz des ermittelten Intelligenten Netzes initiiert wurde,
- die genannte Abfrage derart zu der genannten Dienstplattform weitergeleitet wird, dass sich die Abfrage aus der Sicht der Dienstplattform als eine direkt von der genannten Vermittlungsstelle kommende Abfrage darstellt.

2. Verfahren nach Anspruch 1,
**dadurch gekennzeichnet,**
**dass** zu der genannten Ermittlung des Netz-Betreibers der INAP-Teil der Signalisierungs-Meldung ausgewertet wird.

3. Verfahren nach Anspruch 1,
**dadurch gekennzeichnet,**
**dass** zu der genannten Ermittlung des Netz-Betreibers der SCCP-Teil der Signalisierungs-Meldung ausgewertet wird.

4. Verfahren nach einem der Ansprüche 1 bis 3,
**dadurch gekennzeichnet,**
**dass** die genannte Abfrage über das Signalisierungssystem Nr.7 übermittelt wird.

5. Verfahren nach einem der Ansprüche 1 bis 5,
**dadurch gekennzeichnet,**
**dass** die genannte Abfrage über ein IP-basiertes Netz übermittelt wird.

6. Verfahren nach einem der Ansprüche 1 bis 5,
**dadurch gekennzeichnet,**
**dass**
- von dem genannten Server (NP-Server) die IN-Abfrage durch die Angabe von Routing-Information zu einem Gateway des ermittelten Netzbetreibers beantwortet wird, wenn es sich bei dem ermittelten Netzbetreiber nicht um denjenigen NetzBetreiber handelt, innerhalb dessen Netz der IN-Call initiiert wurde,
- von der Vermittlungsstelle der IN-Call zu dem genannten Gateway weitergeleitet wird.

7. Server (NP-Server), der
- von einer Vermittlungsstelle (Ursprungs-VST) eines Netzes eine Abfrage bezüglich eines Calls empfängt, der zu seiner Behandlung die Unterstützung eines Intelligenten Netzes benötigt,
- anhand der in der Abfrage enthaltenen Informationen ermittelt, welches Intelligente Netz den genannten Call unterstützt,
- die Abfrage an eine Dienstplattform (IN-Dienstplattform) des ermittelten Intelligenten Netzes weiterleitet, wenn der Call in demjenigen Netz initiiert wurde, das dem ermittelten Intelligenten Netz als Basis-Netz zugrunde liegt.

8. Server nach Anspruch 7,
**dadurch gekennzeichnet,**
**dass** er die genannte Abfrage durch die Angabe von Routing-Information zu einem Gateway des dem ermittelten Intelligenten Netz zugrunde liegenden Basis-Netzes beantwortet, wenn der Call nicht in demjenigen Netz initiiert wurde, das dem ermittelten Intelligenten Netz als Basis-Netz zugrunde liegt.

## Claims

1. Method for handling calls, according to which
- a switching centre (source VST) in a network which is based on an intelligent network as the basic network starts a query to an intelligent network relating to a received call for whose handling the support of an intelligent network is required,
- said query is received by a specific server (NP server), which uses the information contained in the query to determine the intelligent network by which the call is being supported,
- said server passes on said query to a service platform (IN service platform) in the intelligent network which has been determined if the call was initiated in the basic network of the intelligent network which has been determined,
- said query is passed on to said service platform in such a manner that, as seen from the service platform, the query represents a query coming directly from said switching centre.

2. Method according to Claim 1,
**characterized in that**
the INAP part of the signalling message is evaluated for said determination of the network operator.

3. Method according to Claim 1,
**characterized in that**
the SCCP part of the signalling message is evaluated for said determination of the network operator.

4. Method according to one of Claims 1 to 3,
**characterized in that**
said query is transmitted using signalling system No. 7.

5. Method according to one of Claims 1 to 4,
**characterized in that**
said query is transmitted using an IP-based network.

6. Method according to one of Claims 1 to 5,
**characterized in that**
- said server (NP server) responds to the IN query by stating the routing information relating to a gateway of the network operator which has been determined if the network operator which has been determined is not that network operator within whose network the IN call was initiated,
- the switching centre passes on the IN call to said gateway.

7. Server (NP server) which
- receives from a switching centre (source VST) in a network a query relating to a call which requires the support of an intelligent network for its handling,
- uses the information contained in the query to determine which intelligent network supports said call,
- passes the query on to a service platform (IN service platform) in the intelligent network which has been determined if the call was initiated in that network which is based on the intelligent network which was determined as the basic network.

8. Server according to Claim 7,
**characterized in that**
said server responds to said query by stating routing information relating to a gateway in the basic network on which the intelligent network which has been determined is based, if the call was not initiated **in that** network which is based on the intelligent network which was determined as the basic network.

## Revendications

1. Procédé de traitement d'appels, selon lequel
- une demande à un réseau intelligent est démarrée par un central téléphonique (central de départ) d'un réseau qui est à la base d'un réseau intelligent réalisé en tant que réseau de base, en ce qui concerne un appel reçu, pour le traitement duquel l'assistance d'un réseau intelligent est nécessaire,
- ladite demande est reçue par un serveur déterminé (serveur NP), au moyen duquel il est déterminé à l'aide des informations contenues dans la demande par quel réseau intelligent l'appel est assisté,
- ladite demande est transmise par ledit serveur à une plateforme de service (plateforme de service IN) du réseau intelligent déterminé lorsque l'appel a été initié dans le réseau de base du réseau intelligent déterminé,
- ladite demande est transmise à ladite plateforme de service de telle manière que la demande se présente, du point de vue de la plateforme de service, comme une demande venant directement dudit central téléphonique.

2. Procédé selon la revendication 1,
**caractérisé en ce**
**que** la partie INAP du message de signalisation est évaluée pour ladite détermination de l'opérateur de réseau.

3. Procédé selon la revendication 1,
**caractérisé en ce**
**que** la partie SCCP du message de signalisation est évaluée pour ladite détermination de l'opérateur de réseau.

4. Procédé selon l'une quelconque des revendications 1 à 3,
**caractérisé en ce**
**que** ladite demande est transmise par l'intermédiaire du système de signalisation n° 7.

5. Procédé selon l'une quelconque des revendications 1 à 5,
**caractérisé en ce**
**que** ladite demande est transmise par l'intermédiaire d'un réseau basé IP.

6. Procédé selon l'une quelconque des revendications 1 à 5,
**caractérisé**
**en ce que**
- une réponse est donnée à la demande IN par ledit serveur (serveur NP) par l'indication d'informations d'acheminement vers une passerelle de l'opérateur de réseau déterminé lorsque l'opérateur de réseau déterminé n'est pas l'opérateur du réseau dans lequel l'appel IN a été initié,
- l'appel IN est transmis par le central téléphonique à ladite passerelle.

7. Serveur (serveur NP) qui
- reçoit, d'un central téléphonique (central de départ) d'un réseau, une demande concernant un appel qui nécessite l'assistance d'un réseau intelligent pour son traitement,
- à l'aide des informations contenues dans la demande, détermine quel réseau intelligent assiste ledit appel,
- transmet la demande à une plateforme de service (plateforme de service IN) du réseau intelligent déterminé lorsque l'appel a été initié dans le réseau intelligent qui est à la base du réseau intelligent déterminé comme réseau de base.

8. Serveur selon la revendication 7,
**caractérisé en ce**
**qu'**il donne une réponse à ladite demande par l'indication d'informations d'acheminent à une passerelle du réseau de base à la base du réseau intelligent déterminé lorsque l'appel n'a pas été initié dans le réseau qui est à la base du réseau intelligent déterminé comme réseau de base.
